# EUROPÄISCHE PATENTANMELDUNG

(11) **EP 2 253 899 A2**
(43) Veröffentlichungstag der Anmeldung: **24.11.2010**
(21) Anmeldenummer: 10160857.8
(22) Anmeldetag: 23.04.2010
(51) Int. Cl.: F24H 1/14

(54) **Zweiseitiger-Zwischenraumkammer-Durchlauferhitzer**

(30) Priorität: 15.05.2009 DE 102009021432; 15.05.2009 DE 202009007007 U
(71) Anmelder: Kunz, Alexander, 45966 Gladbeck (DE)
(72) Erfinder: Kunz, Alexander, 45966 Gladbeck (DE)
(74) Vertreter: Nunnenkamp, Jörg

(57) **Zusammenfassung**

Gegenstand der vorliegenden Erfindung ist ein Durchlauferhitzer, welcher mit einem Rohrheizkörper (1), und mit einem den Rohrheizkörper (1) im Innern aufnehmenden äußeren Rohr (3) ausgerüstet ist. Das äußere Rohr (3) weist mehrere außen aufgebrachte Heizeinrichtungen (2a, 2b, 2c, 2d) auf. Dazu wird zu erhitzendes Wasser durch einen Zwischenraum (4a, 4b) zwischen dem Rohrheizkörper (1) und dem äußeren Rohr (3) hindurchgeführt. Erfindungsgemäß setzt sich das äußere Rohr (3) aus wenigstens zwei Rohren (3a, 3b) unterschiedlichen Durchmessers zusammen, so dass zugehörige sowie unterschiedliche Zwischenraumkammern (4a, 4b) zwischen dem jeweiligen Rohr (3a, 3b) und dem durchgängigen Rohrheizkörper (1) gebildet werden.

## Beschreibung

Die vorliegende Erfindung betrifft einen Durchlauferhitzer, insbesondere einen Wasserdurchlauferhitzer, mit einem Rohrheizkörper, und mit einem den Rohrheizkörper im Innern aufnehmenden äußeren Rohr, welches mehrere außen aufgebrachte Heizeinrichtungen aufweist, wobei zu erhitzendes Wasser durch wenigstens einen Zwischenraum zwischem dem Rohrheizkörper und dem äußeren Rohr hindurchgeführt wird.

Ein derartiger Durchlauferhitzer ist durch die DE 20 2004 009 349 U1 bekannt geworden. Hierbei wird das Ziel verfolgt, die Gesamtheizleistung auf möglichst geringem Raum kompakt zur Verfügung zu stellen. D. h., Fragen der Energieeinsparung spielen offensichtlich keine oder nur eine untergeordnete Rolle.

Die DE 93 18 498 U1 beschäftigt sich mit einem Heizeinsatz eines elektrischen Durchlauferhitzers. Dieser ist mit einem metallischen Außenrohr und einem einseitig geschlossenen metallischen Innenrohr ausgerüstet, zwischen denen ein Raum gebildet ist, der von dem zu erwärmenden Medium durchflossen wird.

Schlussendlich beschäftigt sich die DE 203 21 667 U1 mit einem Flüssigkeitserhitzer, insbesondere einem Wasser-Durchlauferhitzer der Sanitärtechnik. Dieser verfügt über einen die Flüssigkeit führenden Strömungsraum zwischen einem Außenmantelteil und einem Innenrohr. Das Außenmantelteil weist einen aufgebrachten Flächenheizkörper auf. Der Strömungsquerschnitt des Strömungsraumes verkleinert sich in Strömungsrichtung, um die Heizleistung örtlich anpassen zu können.

Der Erfindung liegt das technische Problem zugrunde, einen derartigen Durchlauferhitzer so weiter zu entwickeln, dass der Energieverbrauch gesenkt ist. Zur Lösung dieser technischen Problemstellung schlägt die Erfindung einen Durchlauferhitzer nach Anspruch 1 vor. Vorteilhafte Ausgestaltungen werden in den Ansprüchen 2 bis 7 beschrieben.

Die Erfindung basiert auf dem Prinzip eines Wasserdurchlauferhitzers, mit der neuen Technologie. Bei dem alten Prinzip der Durchlauferhitzer haben wir mit dem Problem "hoher Energieverbrauch bzw. Energieaufwand" um eine Menge Wasser in kurze Zeit zu erwärmen, zu kämpfen.

Dank meiner Erfindung senken wir den Energieverbrauch wesentlich mehr, um die gleiche Wirkung zur erzielen. Dabei verbrauchen bzw. brauchen wir nur einen Teil von der Energie, was wir sonst für einen herkömmlichen Durchlauferhitzer benötigen.

Die universelle Zwischenraumkammer beidseitig des Durchlauferhitzers unterscheidet sich von dem herkömmlichen Durchlauferhitzer durch:
1) Arbeitsbereich ab 12 V, Erwärmung des Wassers geschieht innerhalb von 2-3 Sekunden.
2) Die Erwärmung wird von zwei Seiten über den ganzen Umlauf der Hitzekammer produziert.
3) Zwischenraumheizkammer Wassererwärmung.
4) Anwendung in beliebiger Spannung bzw. Leistungsbereichen nach Bedarf. Bei Gleichspannung sowie Wechselspannung und nach Bedarf mit beiden gleichzeitig.
5) Auf dem Rohr (3) befinden sich drei bis vier gleiche äußere Heizkörper.
6) Genau so verwendet man vier äußere Heizkörper für die Änderung der verschiedenen Wassertemperaturen.
7) Neue Technik für die Wassererwärmung.
8) Zweistufige Wassererwärmung.
9) Meine Erfindung kann man in der Industrie und in Haushalten zur Dampferzeugung verwenden und wohl gemerkt mit Einsatz von weniger Energie.

Für das neue System des Wassererhitzers nehmen wir einen ganz normalen elektrischen Rohrheizkörper (1). Er sollte absolut gerade sein.
Man schiebt ihn durch ein metallisches Rohr (3), mit hoher Wärmeableitung. Das Rohr (3) muss kürzer sein als der Rohrheizkörper (1). Die Länge und der innere Durchmesser des äußeren Rohres (3) hängt von dem ersten Rohrheizkörper (1) und der wiederum hängt von der Spannung und Leistung der eingesetzten Energie ab.

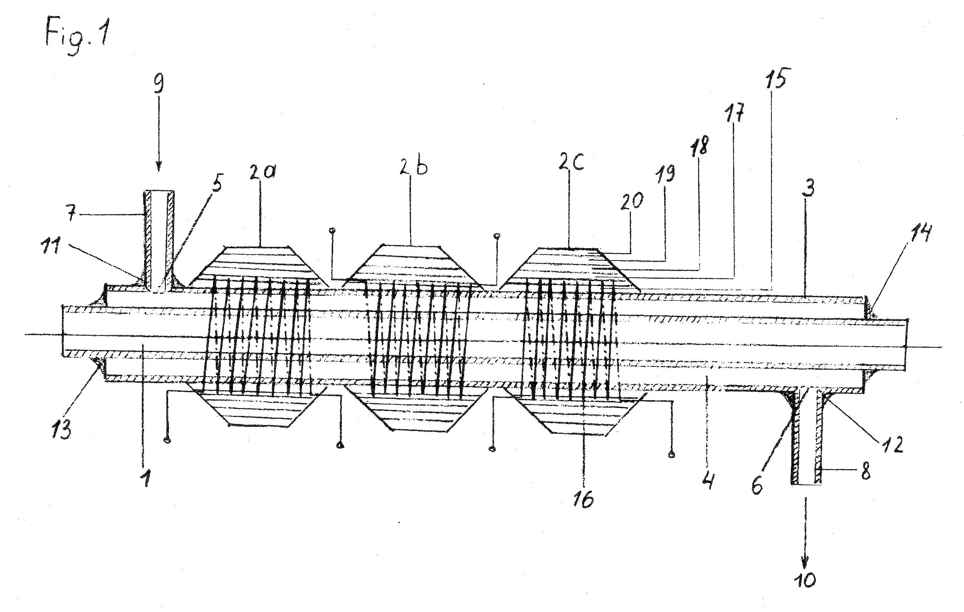

Zwischen innerem Rohrheizkörper (1) und äußerem Rohr (3) befindet sich ein Zwischenraum (4). Dieser Zwischenraum (4) ist eine Hitzekammer. Vor dem Aufbau bereiten wir an dem Rohr (3) (siehe Fig. 1) zwei gleiche Löcher (5,6) vor.

Der Seitenabstand der beiden Löcher (5,6) beträgt von der linken Seite so wie von der rechten Seite ca. 10 mm. Zwei kurze Rohre (7, 8) werden durch eine jeweilige Schweißnaht (11,12) mit den Löchern (5,6) verbunden. Das eine Loch (5) dient für die Kaltwasserzufuhr (9) und das andere Loch (6) für die Heißwasserentnahme (10).

Bevor wir das Rohr (3) jeweils an zwei Enden an den ersten Rohrheizkörper (1) anschweißen, muss man sich noch mal überzeugen, ob das Rohr (3) richtig zentriert ist und der innere Zwischenraum (4) der richtigen Breite entspricht (ca. 0,5 mm). Dabei befindet sich der Rohrheizkörper (1) mittig und zentriert im Rohr (3) der Länge entlang.

Wenn man das Rohr (3) versetzt, hat man erhebliche Verluste bei der Wärmeabgabe und verringerten Durchfluss des warmen Wassers zu folge. Nur nach dem wir alles kontrolliert haben, können wir das Rohr (3) jeweils an zwei Enden über den Randumfang mit dem ersten inneren Rohrheizkörper (1) verschweißen. Dank dieses Aufbaus ermöglichen wir den erwünschten Effekt zur Wassererwärmung zu erzielen. Dieses Prinzip ist die neue Technologie bzw. das System zur effektiven und energiesparsamen Wassererwärmung.

Danach bauen wir drei gleiche äußere Heizkörper (2a, 2b, 2c) zum Kaltwasseranschluss auf die Oberfläche des Rohres (3). Wir nehmen beispielsweise Glimmer (15) als elektrischen Isolator. Er wird auf die Oberfläche des Rohres (3) aufgewickelt. Auf den Glimmer (15) wickelt man elektrische Heizspirale (16) mit hohem spezifischen Widerstand. Auf die Heizspiralen (16) wickeln wir wieder den Glimmer (17) und dann umwickeln wir das Ganze mit einer Metallfolie (18). Auf die Metallfolie (18) wickeln wir Steinwolle (19) um die Funktion zur Erhaltung thermischer Energie zu erreichen. Dann wickeln wir wieder das Ganze mit einer Alufolie (20) um. Erst dann ist unserer äußere Heizkörper (2a, 2b, 2c bzw. 2d) fertig.

Für die effektive Wärmeabgabe wird das alles an der Rohroberfläche (3) sehr dicht aneinander aufgewickelt um die Wärmeverluste zu vermeiden. In meiner Erfindung wird das Wasser sofort und gleichzeitig von beiden Seiten erhitzt. Das Wasser wird auf die erwünschte Temperatur innerhalb von 2-3 Sekunden erhitzt.

Das Prinzip der Arbeit des Durchlauferhitzers. Wenn das Kaltwasser aufgedreht wird reihen sich sofort die innere und äußere Heizkörper (2a, 2b, 2c, 2d) gleichzeitig ein. Das Wasser unter dem Druck geht in die erwärmte Zwischenraumkammer 4 ein und wird auf die nötige Temperatur erwärmt. Dann fließt das erwärmte Wasser zum Konsumenten bzw. Verbraucher.

Diese Technik funktioniert mit 12 V bis 400 V und höher je nach Bedarf z.B. im Haushaltsbereich von 12 V bis 120 V und im Industriebereich von 12 V bis 230 V und bis 400 V. Es gilt für die Gleichspannung sowie Wechselspannung und nach Bedarf mit beiden gleichzeitig.

Dieser Durchlauferhitzer ist in sicherheitstechnischen Bereichen absolut sicher und ungefährlich in allen Bereichen. Technische Daten von dem ersten inneren Rohrheizkörper (1) für die Küchenspüle: Spannung 24 V Leistung 600 W und von dem ersten äußeren Heizkörper (2a): Spannung 12 V Leistung 200W. Zweiter (2b) und Dritter (2c) Heizkörper werden ebenfalls mit 12 V und 200W betrieben. Die Breite des Zwischenraumes (4) der Hitzekammer soll demzufolge 0,5 mm sein.

Der universeller Durchlauferhitzer kann im Haushaltsbereich beispielsweise für Dusche und das Bad verwendet werden. Dann ist der Zwischenraum (4) von ca. 1 mm nötig. Und die Spannung von dem ersten inneren Rohrheizkörper (1) beträgt dann 120 V und die drei äußeren Heizkörper (2a, 2b, 2c) haben jeweils 36 V. Man kann auch diesen Durchlauferhitzer für Spülmaschinen oder Waschmaschinen und im Heizsystem und in allen möglichen Bereichen der Wassererwärmung verwenden. Der Zwischenraum hängt dann von dem konsumierten Wasserverbrauch ab.

Diese Erfindung kann man auch in Industriebereichen genau so nutzen und eine größere Menge von Wasser oder andere Flüssigkeiten zu erhitzen. Es ändern sich dann nur die Dimensionen des Gerätes.

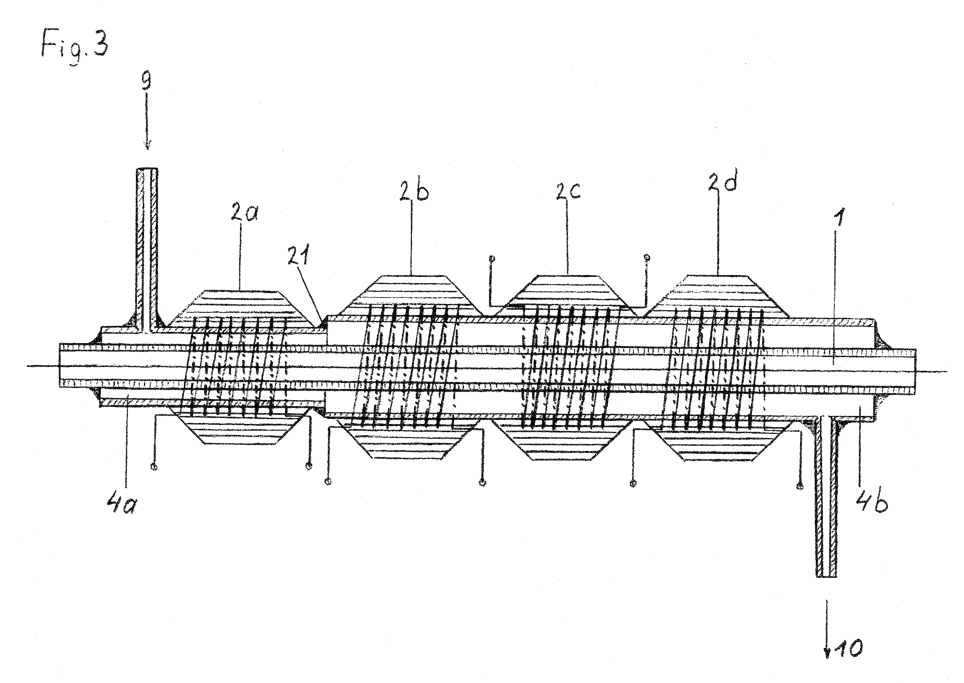

Um zu bewirken, dass der neue Durchlauferhitzer die Wassertemperatur verändert, montieren wir auf dem äußeren Rohr (3) vier äußere Heizkörper (2a, 2b, 2c, 2d) (siehe Fig. 3) mit verschiedener Spannung und Leistung. Genau so wichtig ist die Bestimmung der Breite des Zwischenraumes (4) in der Heizkammer in Schritten 0,5 mm -1 mm -1,5 mm - 2 mm und weiter für die beidseitige Wassererwärmung.

Für eine bestimmte Temperaturregelung passen wir die Spannungen und die Leistungen der vier Heizkörper (2a, 2b, 2c, 2d) nach Bedarf an. Das alles hängt von der benötigten Temperatur und Menge des Wasserverbrauches ab.

Beispiel: Für die Waschmaschine hat der innere erste Rohrheizkörper (1) die Spannung 120 V und die Leistung 600 W. Und die vier äußereren Heizkörper (2a, 2b, 2c, 2d) haben verschiedene Spannung und unterschiedliche Leistung. Bei Maximaltemperatur 90° C müssen alle fünf Erhitzer an sein. Vier äußere Heizkörper (2a, 2b, 2c, 2d) und ein innerer Rohrheizkörper (1).

Ungefähr:
48 V - 36 V - 24 V - 12 V
200W-200W-200W-200W
30° C - 40° C - 60° C - 90° C

Um das Wasser auf 40° C zu erwärmen, schalten sich der erste innere Rohrheizkörper (1) und zwei äußere Heizkörper (2a, 2b) 48 V und 36 V ein. Und die anderen zwei äußere Heizkörper (2c, 2d) 24 V und 12 V müssen aus sein. D. h., die Heizkörper (2a, 2b, 2c, 2d) lassen sich wahlweise ebenso wie der Rohrheizkörper (1) betreiben.

Bei Umschaltung von hoher Temperatur auf kleine wechselt die Wassertemperatur innerhalb von 1-2 Sekunden und umgekehrt von kalt auf warm innerhalb von 2-3 Sekunden.

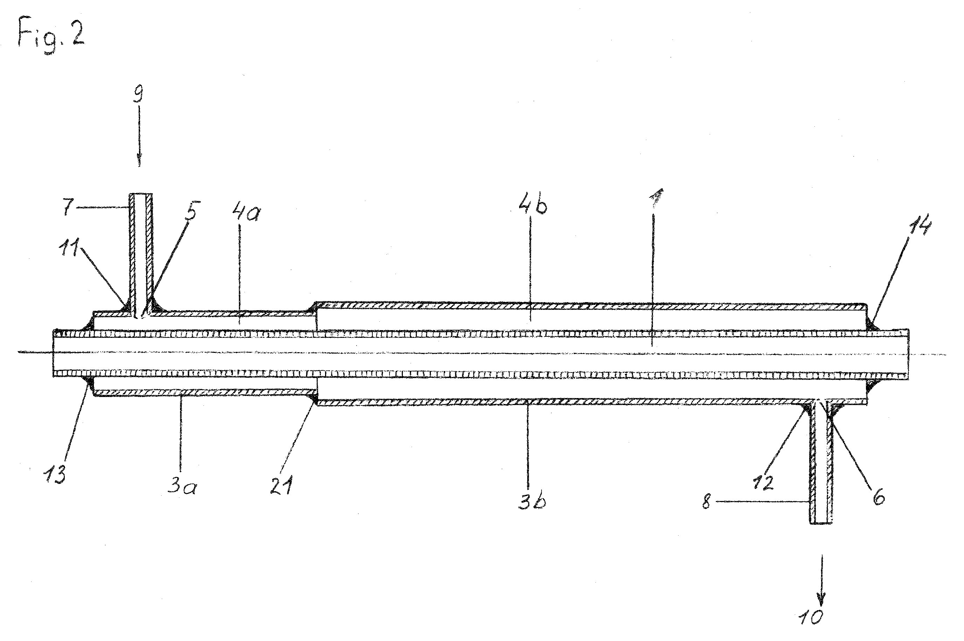

Eine weitere Möglichkeit (siehe Fig. 2) besteht darin, dass durch die Veränderung des äußeren Rohres 3 (siehe Fig. 2) man für zweistufige Wassererwärmung mit unterschiedlichen Zwischenräumen (4a, 4b) in beispielsweise 0,5 mm und in 1 mm der Heizkammer gleichzeitig arbeiten kann.

Bei Montage der Konstruktion werden zwei Rohre (3a, 3b) mit zwei unterschiedlichen Durchmessern miteinander zusammen geschweißt. Dann wird das äußere Rohr (3a, 3b) jeweils an zwei Enden über den Randumfang mit dem inneren Rohrheizkörper (1) über eine Schweißnaht (13,14) wasserdicht verbunden. An der Kaltwasserzufuhr mit Zwischenraum (4a) (von 0,5 mm) benötigen wir einen äußeren Heizkörper (2a) für 48 V. Und die anderen drei Heizkörper (2b, 2c, 2d) versorgen wir 36 V - 24 V - 12 V (für den Zwischenraum (4b) von 1 mm).

Diese neue Technik gibt uns die Möglichkeit eine größere Wassertemperatur zu erzeugen und dabei mit niedrigem Energieverbrauch zu arbeiten. In der Industrie kann man diesen Durchlauferhitzer für die Dampferzeugung bei sehr kleinem Aufwand der Elektroenergie verwenden. Genau so kann man diesen Durchlauferhitzer in Haushaltsbereichen für die Dampferzeugung verwenden. Z.B: Für Spülmaschine mit Zwischenraum (4) von 0,2 mm. Diese Technologie gibt uns die Möglichkeit, bei kleiner Energie und geringem Wasserverbrauch die Spüldauer zu verringern und intensive Wäsche von Geschirr zu erzielen.

Zum Schluss. Dieser zweiseitige - Zwischenraumkammer Durchlauferhitzer hat eine universelle Funktion in Haushalts- und Industriebereichen. Er ermöglicht den Wasserhitzevorgang innerhalb von weniger Sekunden mit sehr geringerer Leistung zu erzeugen. Durch diese Erfindung wird der Leistungsverbrauch in Haushalten und Industrie gesenkt. Das ist eine neue Generation der elektrischen Geräten.

Anhand der Figuren und insbesondere der Fig. 2 und 3 erkennt man, dass sich das äußere Rohr (3) aus wenigstens zwei Rohren (3a, 3b) unterschiedlichen Durchmessers zusammensetzt. Auf diese Weise werden Zwischenraumkammern (4a, 4b) mit variierendem Querschnitt zwischen dem jeweiligen Rohr (3a, 3b) und den durchgängigen Rohrheizkörper (1) gebildet. Die beiden unterschiedlich groß ausgeführten Zwischenraumkammern (4a, 4b) erweitern sich in Strömungsrichtung des zu erhitzenden Wassers.

Tatsächlich wird das Wasser über einen Zulauf bzw. die Kaltwasserzufuhr (9) zugeführt und verlässt den dargestellten Durchlauferhitzer über einen Ablauf bzw. Auslauf (10) respektive die Heißwasserentnahme (10). Die wenigstens zwei Rohre (3a, 3b) umschließen den demgegenüber mittig bzw. im Innern zentral angeordneten Rohrheizkörper (1) konzentrisch. Tatsächlich sind sowohl der Rohrheizkörper (1) als auch die beiden Rohre (3a, 3b) jeweils konzentrisch im Vergleich zu einer angedeuteten Rotationsachse angeordnet.

Auf diese Weise werden die bereits angesprochenen Zwischenraumkammern (4a, 4b) zwischen dem jeweiligen Rohr (3a, 3b) und dem durchgängigen Rohrheizkörper (1) ausgebildet. Die Zwischenraumkammern (4a, 4b) sind gegenüber dem Rohrheizkörper (1) abgedichtet, welcher seinerseits die beiden Rohre (3a, 3b) front- und endseitig überragt. Da die Rohre (3a, 3b) mit unterschiedlichen Durchmessern ausgerüstet sind und im Regelfall ebenso wie der Rohrheizkörper (1) zylindrisch gestaltet sind, ergeben sich die bereits angesprochenen Zwischenraumkammern (4a, 4b) mit variierendem Strömungsquerschnitt. Dabei ist der Strömungsquerschnitt so ausgelegt, dass sich die Zwischenraumkammern (4a, 4b) in Strömungsrichtung des zu erhitzenden Wassers, also vom Zulauf (9) zum Ablauf (10), erweitern. Bei den beiden Zwischenraumkammern (4a, 4b) handelt es sich jeweils um Zylinderschalen bzw. Ringzylinderkammern, die von dem jeweiligen Rohr (3a, 3b) einerseits und dem Rohrheizkörper (1) andererseits begrenzt werden.

Des Weiteren erkennt man, dass die Rohre (3a, 3b) miteinander an ihrer Stoßstelle verbunden sind. Hierzu ist im Rahmen des Ausführungsbeispiels eine Schweißverbindung (21) realisiert, wobei selbstverständlich auch andere Arten der Verbindung an dieser Stelle möglich sind. Die beiden Rohre (3a, 3b) sind jeweils endseitig mit dem Rohrheizkörper (1) verbunden bzw. gegenüber dem Rohrheizkörper (1) verschlossen. Hierzu sind ebenfalls und nicht einschränkend im Rahmen des Beispielfalls die Schweißverbindungen (13, 14) vorgesehen.

Insgesamt wird durch die sich in Strömungsrichtung erweiternden Zwischenraumkammern (4a, 4b) die Strömungsgeschwindigkeit vom Einlauf bzw. Zulauf (9) bis zum Ablauf (10) verringert. Durch die Verringerung der Strömungsgeschwindigkeit lässt sich das durch die beiden Zwischenraumkammern (4a, 4b) hindurchgeführte Wasser besonders energieeffizient aufheizen. Dafür können im Kern zwei Effekte geltend gemacht werden.

Zunächst einmal gilt die Faustregel, dass der Energieeinsatz pro Grad an Temperaturerhöhung mit zunehmender Wassertemperatur steigt. Außerdem gilt die Grundregel, dass der Wärmeübertrag auf das Wasser um so intensiver ist, je langsamer dieses strömt. Da der erfindungsgemäße Durchlauferhitzer bzw. Wasserdurchlauferhitzer eingangsseitig mit der Zwischenraumkammer (4a) relativ geringen Querschnitts ausgerüstet ist, wird das Wasser in diesem Bereich in relativ kurzer Zeit auf eine bestimmte gewünschte Temperatur gebracht. Hierzu steht der an dieser Stelle vorgesehene Heizkörper (2a) zur Verfügung (vgl. Fig. 3).

Im Anschluss hieran nutzt die Erfindung aus, dass eine weitere Temperaturerhöhung besonders viel Heizleistung benötigt. Um dies energieeffizient zu gestalten, erweitert sich die eingangsseitige Zwischenraumkammer (4a) in eine weitere zweite Zwischenraumkammer (4b) mit größerem Querschnitt bzw. größerem Strömungsquerschnitt. Dadurch sinkt die Strömungsgeschwindigkeit des Wassers im Bereich der zweiten anschließenden Zwischenraumkammer (4b).

Auf diese Weise kann der Wärmeübertrag auf das Wasser im Bereich der zweiten nachfolgenden Zwischenraumkammer (4b) erhöht werden. Dennoch lässt sich ausgangsseitig das gewünschte Temperaturniveau erreichen, und zwar bei insgesamt verringertem Energieeinsatz. Die Erfindung begegnet also dem Effekt, dass mit wachsender Temperatur des Wassers jede Temperaturerhöhung mehr Energie fordert dadurch, dass der Wärmeübertrag durch Verringerung der Strömungsgeschwindigkeit intensiviert wird.

Im Übrigen ist die Auslegung im Allgemeinen so getroffen, dass die Länge der in Strömungsrichtung ersten Zwischenraumkammer (4a) geringer als die Länge der daran anschließenden und im Querschnitt größeren zweiten Zwischenraumkammer (4b) bemessen ist. Üblicherweise werden hier Längenverhältnisse von 1:2 oder noch mehr beobachtet. Das heißt, die Länge der zweiten Zwischenraumkammer (4b) ist wenigstens doppelt so groß bemessen wie die Länge der in Strömungsrichtung vorgeschalteten ersten Zwischenraumkammer (4a). Im Rahmen des Ausführungsbeispiels nach Fig. 3 beträgt das Längenverhältnis sogar 1:3.

Denn der ersten Zwischenraumkammer (4a) ist der erste äußere Heizkörper (2a) zugeordnet. Demgegenüber wird die zweite daran anschließende Zwischenraumkammer (4b) mit Hilfe von den drei weiteren vergleichbar aufgebauten Heizkörpern (2b, 2c und 2d) mit Energie versorgt.

Die Querschnittsfläche der jeweils als Ringraum bzw. Ringzylinderkammern ausgebildeten Zwischenraumkammern (4a, 4b) steigt von der ersten Zwischenraumkammer (4a) zur zweiten Zwischenraumkammer (4b) in etwa quadratisch an. Denn die Breite des Ringraumes bzw. der Abstand der in Strömungsrichtung ersten Rohres (3a) im Vergleich zum mittig angeordneten und durchgehenden Rohrheizkörper (1) ist etwa halb so groß wie derjenige des daran anschließenden zweiten Rohres (3b) gegenüber dem Rohrheizkörper (1). Da die Querschnittsfläche quadratisch mit dem fraglichen Abstand wächst, erklärt sich das beschriebene Verhältnis der Querschnittsflächen.

Hiermit einher geht eine Verringerung der Strömungsgeschwindigkeit beim Übergang von der ersten Zwischenraumkammer (4a) zur zweiten Zwischenraumkammer (4b) auf in etwa 1/4. Da zugleich die Länge der anschließenden zweiten Zwischenraumkammer (4b) in etwa das dreifache derjenigen der vorgeschalteten ersten Zwischenraumkammer (4a) beträgt, verlängert sich die mögliche Behandlungszeit in dieser zweiten Zwischenraumkammer (4b) im Vergleich zur ersten Zwischenraumkammer (4a) auf mehr als das Zehnfache.

Der dargestellte Durchlauferhitzer bzw. Wasserdurchlauferhitzer kann für jedwede Art der Erwärmung eines Fluids bzw. von Wasser allgemein eingesetzt werden. Das gilt nicht nur in Verbindung mit Maschinen wie beispielsweise Waschmaschinen oder Spülmaschinen. Auch eine Kombination mit Sonnenkollektoren oder einer Wärmepumpe ist denkbar. Dabei erfolgt in jedem Fall ein besonders energieeffizientes Aufheizen des zugeführten Wassers bzw. Fluids. Dabei kann für das Aufheizen selbstverständlich mit einer konstanten ebenso wie mit einer variablen elektrischen Spannung zur Beaufschlagung der einzelnen Heizkörper bzw. Heizeinrichtungen (2a, 2b, 2c, 2d) gearbeitet werden.

## Patentansprüche

1. Durchlauferhitzer, mit einem Rohrheizkörper (1), und mit einem den Rohrheizkörper (1) im Innern aufnehmenden äußeren Rohr (3), welches mehrere außen aufgebrachte Heizeinrichtungen (2a, 2b, 2c, 2d) aufweist, wobei zu erhitzendes Wasser durch einen Zwischenraum (4a, 4b) zwischen dem Rohrheizkörper (1) und dem äußeren Rohr (3) hindurchgeführt wird,
**dadurch gekennzeichnet, dass**
- sich das äußere Rohr (3) aus wenigstens zwei Rohren (3a, 3b) unterschiedlichen Durchmessers zusammensetzt, so dass
- zugehörige sowie unterschiedliche Zwischenraumkammern (4a, 4b) zwischen dem jeweiligen Rohr (3a, 3b) und dem durchgängigen Rohrheizkörper (1) gebildet werden, wobei sich
- die beiden unterschiedlich groß ausgebildeten Zwischenraumkammern (4a, 4b) in Strömungsrichtung des zu erhitzenden Wassers erweitern.

2. Durchlauferhitzer nach Anspruch 1, **dadurch gekennzeichnet, dass** das äußere Rohr (3) an zwei Enden über den Umfang mit dem inneren Rohrheizkörper (1) dicht verbunden, insbesondere verschweißt ist.

3. Durchlauferhitzer nach Anspruch 1, **dadurch gekennzeichnet, dass** der äußere Heizkörper (2a, 2b, 2c, 2d) auf das äußere Rohr (3) aufgewickelt ist.

4. Durchlauferhitzer nach Anspruch 2, **dadurch gekennzeichnet, dass** der Zwischenraum (4a, 4b) beispielsweise in den Stufen 0,5 mm - 1 mm, 1,5 mm - 2 mm erweitert wird.

5. Durchlauferhitzer nach einem der Ansprüche 1 bis 3, **dadurch gekennzeichnet, dass** er mit 12 V bis 400 V arbeitet und das Wasser auf die erwünschte Temperatur innerhalb von 2 bis 3 sek. erhitzt wird.

6. Durchlauferhitzer nach einem der Ansprüche 1 bis 4, **dadurch gekennzeichnet, dass** mit Gleichspannung und/oder Wechselspannung gearbeitet wird.

7. Durchlauferhitzer nach einem der Ansprüche 1 bis 5, **dadurch gekennzeichnet, dass** er zur Dampferzeugung im Industrie- und Haushaltsbereich eingesetzt wird.

8. Durchlauferhitzer nach einem der Ansprüche 1 bis 7, **dadurch gekennzeichnet, dass** der Rohrheizkörper (1) das äußere Rohr (3) jeweils frontseitig und endseitig überragt.

9. Durchlauferhitzer nach einem der Ansprüche 1 bis 8, **dadurch gekennzeichnet, dass** der Rohrheizkörper (1) und das äußere Rohr (3) konzentrisch zueinander angeordnet sind.

10. Durchlauferhitzer nach einem der Ansprüche 1 bis 9, **dadurch gekennzeichnet, dass** das äußere Rohr jeweils front- und endseitig dicht mit dem Rohrheizkörper (1) verbunden.
